# EUROPEAN PATENT SPECIFICATION

(11) **EP 1 912 062 B1**
(45) Date of publication and mention of the grant of the patent: **08.09.2010**
(21) Application number: 06122261.8
(22) Date of filing: 13.10.2006
(51) Int. Cl.: G01N 27/22, G01N 27/02, G01N 33/49

(54) **A biosensor and chemical sensor implementation using RF and microwave device, circuits and systems**
Biosensor- und chemische Sensorimplementierung unter Verwendung von Hochfrequenz und einer Mikrowellenvorrichtung, Schaltkreisen und Systemen
Biocapteur et implémentation de capteur chimique utilisant les radiofréquences et dispositif à micro-ondes, circuits et systèmes

(43) Date of publication of application: 16.04.2008
(73) Proprietor: Sabanci Universitesi, 34956 Tuzla-Istambul (TR)
(72) Inventor: Gurbuz, Yasar, 34956 Istanbul (TR); Tekin, Ibrahim, 34956 Istanbul (TR); Gul, Özgür, 34956 Istanbul (TR); Kaynak, Mehmet, 34956 Istanbul (TR); Heves, Emre, 34956 Istanbul (TR)
(74) Representative: Berkkam, Ayfer

(56) References cited:
- WO-A-03/081223
- WO-A-2005/031352
- US-A1- 2002 076 690
- US-A1- 2004 197 821
- US-A1- 2004 235 055

## Description

**Technical Field**

This invention is related to a biosensor implementation of the detection of chemical agents such as protein molecules, also with a potential detection of chemicals as well, using specific antibodies.

**Prior Art**

In the state of the art, affinity sensors allow the detection and quantification of target molecules in complex mixtures by affinity-based interactions. Immobilized antibody molecules are the probes that bind to specific protein molecules (targets) in biological fluids. Oscillator that has oscillation frequency controlled by interdigitated electrodes, possibly integrated into transceiver systems, used to measure the changes in the dielectric properties the capacitance between the interdigitated electrode surfaces, induced by capture of target-protein molecules by immobilized antibodies between the electrodes. Any change in dielectric properties of the capacitance between the interdigitated electrodes changes the capacitor value between the electrodes, hence changing the oscillation frequency of the oscillator and/or frequency of the propagated / received rf-signal, in the case of a transceiver implementation, leading to detection of target protein molecules or chemicals in type and quantity.

Besides the inexpensive production and low sample consumption, main advantages of immuno/chemical controlled oscillator-based transceiver transducers are the label free detection mechanism and the fast measurements. Unlike other detection mechanisms used to quantify protein concentrations, capacitive method does not need labeled samples. Upon binding of protein molecules to the immobilized antibody molecules on the surface of electrodes, dielectric properties of an electrode surface changes and measurement / detection can be taken, from the oscillator - based transducer immediately / observed after hybridization.

Interdigitated electrodes were used to detect pathogens, proteins, and DNA. Many techniques have been applied to the impedance measurements and improving/amplifying changes in impedance after treatment of sensor. However, these systems are bulky, costly, slow in response, hence limiting the deployment of these sensors in many applications.

In the document numbered US 2002/0150886, a using of impedance measurements to detect the presence of pathogens attached to antibody-coated beads is disclosed.

In another document numbered US6440662, a sensor for identifying molecular structures within a sample solution is disclosed.

As mentioned above, although the main problem about bio/chemical sensing is the low sensitivity and detection ranges, our signal transduction method is different from these works cited above and worked on the principle of modified analyte or biological/chemical components of the system to amplify the signal. Another problem about these types of transduction / sensing methods is that discrete integration requirement of sensing unit and signal processing / conditioning unit, generating sometimes noise level that is actually greater than the signal induced by the sensor, interdigitated capacitor.

Brief description of the invention

The present invention provides a biosensor according to claim 1.

**Detailed description of the invention**

The biosensor implementation realized in order to attain the object of this invention is illustrated in the accompanying figure, wherein;

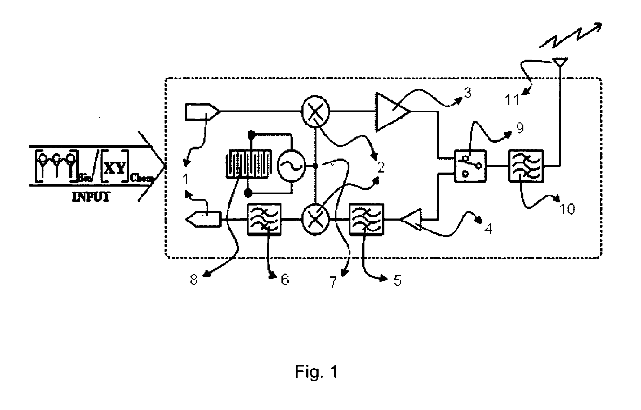

Figure 1- is the schematic view of proposed single-chip, Bio / Chemical transceiver transducer architecture for biological and chemical signal transduction.

The components illustrated in the figure have each been numbered corresponding to the following;

1- IF

2- Mixer

3- PA

4- LNA

5- IR Filter

6- IF filter

7- VCO

8- Interdigitated Capacitive Transducer

9- T/R Switch

10- T/R Filter

11- Antenna

The object of this invention is to realize a biosensor implementation wherein, input signals to the transceiver are target bio/chemical agents causing a change in the dielectric constant of the electrical device, exposed to environment, integrated into the circuit of the transceiver, hence causing a change in the parameters of the RF (radio frequency) outputs of the said circuit and by this change the type and amount of bio/chemical agents can be detected or estimated.

The preferred implementation of our invention, experimentally presented as well, relies on the signal transduction by immuno / chemical- controlled oscillator whose oscillation frequency is controlled and / or changed by the reaction between the analytes and immobilized detection molecules between the electrodes. This oscillator can also be monotically integrated into a transceiver system for further enhancement or transfer of the induced signal change as well as signal-to-noise ratio.

The novelty of our proposal is the way of on-chip, signal transduction mechanism and wireless transmission of the transduced signal, as described above. This protein-controlled, oscillator-based, single-chip transceiver transducer could have a great impact / change on the way that protein molecules are currently being detected. The advantages of this proposed idea / transducer system are
- Lower usage of sample volume, the total active area of integrated /interdigitated capacitive transducer would be in the order of µm².
- Low production cost for the transducer, since it would be fabricated with already available process steps of integrated circuit technology, also to be used for the realization of complete, single-chip transceiver transducer higher sensitivity to detection of proteins / biological /chemical agents

* integrated/interdigitated capacitor can be optimized to increase the active area

* the gain function of the oscillator circuit (K) can be used to amplify the transduced signal/ capacitor change

- Single/Integrated Transceiver Transducer can also reduce the signal loss and also suppress the noise, otherwise could be coming/generated from discrete integration Effective / Efficient Signal transfer, enabling

* remote sensing application such as biological warfare agents, environmental hazardous agents such as nuclear / chemical / biological wastes

- Lower system cost, enabling disposable use in applications such as medical, process control / monitoring, etc.

- Lower/no maintenance

- On-Chip signal processing / reading / recognition / quantification, eliminating the need for signal reading systems such as heavy/expensive optical systems

These advantages can be utilized for efficient sensing /detecting of biological / chemical agents / proteins in

* BioMedical Analysis: detection of risk markers in blood / urine samples (cardiovascular, cancer, diabeties, etc.) for preventive medicine

* Detection of biological / chemical warfare agents

* Detection of biological / chemical wastes in environmental applications

* Air quality and monitoring.

Oscillators, sometimes as part of the phase-locked-loops -PLL- or frequency synthesizers, provide reference signals in transceivers (transmitter and receivers) that are especially finding wide range of use in today's wireless communication applications. To maintain the constant intermediate / local frequency, the oscillator must change frequency as the input signals change frequency. With a variable-frequency, oscillator is possible to tune the frequency translation circuit to a wide range of input RF signals and therefore enable multichannel communications, such as dual-band, amplitude-modulated (AM) radios. Such variable-frequency oscillators were an adaptation of the basic resonant-circuit oscillators, in which one of the resonant elements (an inductor or capacitor) would vary. Most often, it was the capacitor that was varied. High-quality variable capacitors were constructed from ganged multi-plate metal air-gap capacitors. Attributed to today's integrated circuit technology, variable capacitors are also available, tuned with applied voltage - so called "voltage-controlled capacitors," in the form of pn-junction diodes, metal-oxide-semiconductor capacitors, etc. Monolithic Voltage-controlled oscillator (VCO) (7) technology, where tuning of frequency provided by voltage-controlled/variable capacitors, continues to appear in an increasing number of new products, with high-quality VCOs (7) integrated with the transceiver circuitry. For example, the latest transceivers for the WLAN and Bluetooth markets integrate the VCO (7) within the RF transceiver IC, resulting in a dramatic reduction in size compared to discrete components. In higher-performance WLAN radios (2.4-GHz IEEE 802.11 b and 5-GHz 802.11 a versions), system requirements call for higher-performance VCOs (7) with the very low phase noise needed to achieve the needed packet data rates and blocking performance levels.

The binding of an analyte to an immobilized molecule can be detected without any labeling or secondary reactions. Changes in the dielectric constant of the interdigitated electrodes are correlated to the bound protein molecules to the antibodies on the surface. The dielectric constant of the antibodies changes the dielectric constant between two conductor fingers and this result in alternating capacitance. Interdigitated electrode arrays are used in order to increase the surface area of the conductors for higher sensitivity to binding events. AFM and electrochemical methods are used to measure the changes, but impedance analysis gives faster results.

For proof-of-principle- purposes, a discrete interdigitated capacitor-based immunosensor is used and fabrication steps of these interdigitated electodes are described below. Briefly, again for the proof-of-principle, each finger's length is 750 micron and its width is 25 micron. (3-glycidoxypropyl)-trimethoxy silane (GPTS) is used to activate to surface for antibody immobilization. For preliminary work, proof-of-principle, we have used fluorescent-labeled anti-mouse antibodies for easy detection and correlation of immobilization. Biosensors on glass slides are scanned using microarray scanner and capacitive measurements were taken using Karl-Suss PM5 RF Probe Station and Agilent 8720ES S-Parameter Network Analyzer. For proof-of-principle, on-chip data measurements and data transfer, we have attached a VCO (7) chip to the interdigitated electrode-based immunosensor. For fabrication of the interdigitated electrodes, first very thin tungsten layer of 30 nm is sputter deposited on the glass microscope slide, which is used to improve adhesion of gold on substrate. Then 300 nm of gold is deposited using sputter deposition, which will form the interdigitated electrodes. Following this step, the gold layer is patterned by wet etching with interdigitated electrode mask. I₂/KI/H ₂O solution is used to etch gold layer and 30% hydrogen peroxide (H₂O₂) is used to etch the underlying tungsten layer. After that, an oxide layer of 50 nm is deposited on the electrodes and the top of contact pads are opened using HF solution. The oxide layer is deposited to improve the coating of epoxy silane layer which will be used to immobilize antibodies.

Final structure, being worked on is presented in Figure 1. Here the transceiver's local frequency is set by VCO (7) / PLL whose frequency is tuned by interdigitated capacitor, integrated into the VCO (7). The operating principle of this system would be based on the change of dielectric constant of the interdigitated capacitor / electrodes upon exposure to target protein molecules, captured by pre-immobilized antibodies between the electrodes. This change of dielectric constant changes the capacitor value, hence changing the oscillation frequency of oscillators and also the propogated, rf-signal by the transceiver. Since this change of propagated-frequency (or oscillation frequency) induced by the captured proteins, the system can be called as "protein-controlled oscillator." Figure 1 shows a detailed, process / device/transducer/ circuit /system integration of the proposed single-chip, protein / bio - controlled oscillator-based transciever transducer for wireless biological / chemical data transmission.

IF (1) defined as the frequency to be altered by the subsequent devices or already altered by the previous devices due to induced biological /chemical agents. IF (1) is also the signal processed by baseband processors.

Mixer (2) is the stage that mixes the processed signal (either from transmitter or receiver chains) with the local oscillator signal and is also the stage where passive components such as inductors and varactors that can be used as signal transducer from chem/bio to frequency/electrical.

PA (3) is the stage where processed signal is amplified before sending to antenna/propagation and also utilizes inductors and capacitors that can also be used to transduce signal from bio/chem domain into a frequency /electrical-signal change at its output.

LNA (4) is the stage where the received signal of the receiver chain passed through for amplification with a high signal-to-noise ratio. It utilized inductors and varactors that can be used as signal transducers to covert the bio/chem signals to the frequency/electrical signal change at its output.

IR Filter (5), IF Filter (6) and T/R Filter (10) are the stages where the received or transmitted signal conditioned to a desired frequency /amplitude and are usually based on piezoelectric materials or inductors and capacitors combinations, that can even be utilized using RF-MEMS technology, and can be used for the conversion of bio/chem agents/signals into change in their output signals (frequency / amplitude)

Demonstrator of this application where a capacitive transducer (8), utilized in the VCO (7), is used to convert bio/chem signals, applied to the capacitor, into a frequency / amplitude change at the output of the VCO (7), though which identification and quantification of these bio/chemicals performed.

T/R Switch (9) is a device deciding on which chain of the transceiver would be on. It can be made out of RF-MEMS technology and can also be used as a signal transducer, where the controlling action can be performed through bio/chem quantities through which detection and identification of these quantities can take place.

Antenna (11) is the stage / device used to propagate the outgoing/processed signal of the transmitter chain or receive the signal for the receiver chain and can be based on RF-MEMS devices through which detection and identification of chem/bio quantities can take place.

**Experimental Results**

We have observed a change in the Smith-chart output between reference and the test sample that has been coated with fluorescent-labeled antibody. Impedance values have changed after antibody immobilization in the 1-3.3 GHz frequency range. We have observed the preliminary results of concentration changes that make a shift in conductivity measurements. In parallel, we have confirmed the immobilization procedure by fluorescent scanning. We proved that, up to 0.5 pF of capacitive change, which can further be enhanced by optimizing the capacitance geometries can be achieved related to the dimensions of the capacitance and operating frequency, which directly shifts the resonance frequency of VCO (7).

## Claims

1. A biosensor for converting chemical and or biological molecule signals at their input into electrical signals at their output, for detection of chemical and/or biological agents such as protein molecules comprising an interdigitated capacitor transducer (8) whose dielectric constant is changing when exposed to target protein molecules, captured by pre-immobilized antibodies between its electrodes, **characterised by** a voltage controlled oscillator (7) connected to said interdigitated capacitor transducer (8) and adapted to generate a local oscillator signal, and further **characterised by** a transceiver with the following components:
- a baseband processor (i) adapted to generate a processed signal
- a mixer (2) adapted to mix the processed signal with the local oscillator signal,
- a power amplifier (3) adapted to amplify the processed signal before sending it to an antenna (11),
- a T/R switch (9) adapted to decide between a transmitter chain and a receiver chain,
- a T/R filter (10) adapted to condition the received or transmitted signal to a desired frequency/amplitude,
- an antenna (11) adapted to propagate the outgoing/processed signal of the transmitter chain or to receive the signal for the receiver chain.

2. A biosensor for detection of chemical agents such as protein molecules as defined in Claim 1 is **characterized by**;
a low noise amplifier (4) which amplifies the received signal of the receiver chain with a high signal-to-noise ratio.

3. A biosensor for detection of chemical agents such as protein molecules as defined in Claim 1 and 2 **characterized in that** input signals to the sensor are target bio/chemical agents causing a change in the dielectric constant of the medium between the interdigitated capacitor transducer (8), exposed to environment, integrated into the circuit of the transceiver, hence causing a change in the parameters of the RF outputs of the said circuit and by this change the type and amount of bio/chemical agents can be detected or estimated.

4. A biosensor for detection of chemical agents such as protein molecules as defmed in any of the preceding claims **characterized in that** the antibodies used in the detection are catalysts- organic materials between the interdigitated capacitor transducer (8) to detect hydrogen and hydrocarbon gases/chemicals.

5. A biosensor for detection of chemical agents such as protein molecules as defmed in any of the preceding claims **characterized in that** the antibodies used in detection are organic oxides between the interdigitated capacitive transducer (8) to detect oxygen and oxygen reducing gases/chemicals.

## Patentansprüche

1. Ein Biosensor zur Umwandlung der chemischen und/oder biologischen Molekulsignalen beim Input, in die elektrische Signale beim Output, um die chemischen und/oder biologischen Stoffe, wie zB. Proteinmolekule festzustellen, umfaßt einen ineinander greifenden kapazitiven Energieumwandler (8), dessen dielektrische Konstante sich verändert, wenn er zu den gezielten, von den vorimmobilisierten Antikörpern zwischen seinen Elektroden erfassten Proteinmolekule ausgesetzt wird, **gekennzeichnet durch** einen über Spannung gesteuerten Oszillator (7), der dem genannten, ineinander greifenden kapazitiven Energieumwandler (8) angeschlossen wird und angepasst ist ein örtliches Oszillator-Signal zu erzeugen und ferner **gekennzeichnet durch** einen Sende-Empfänger mit den folgenden Komponenten:
- einen Basisband-Prozessor (i), der angepasst ist ein verarbeitetes Signal zu erzeugen,
- einen Mischer (2), der angepasst ist die verarbeiteten Signale mit den örtlichen Oszillator-Signalen zu vermischen,
- einen Leistungsverstärker (3), der angepasst ist die verarbeiteten Signale zu verstärken, bevor er sie zu der Antenne (11) schickt,
- einen T/R (Sender/Empfänger) Schalter (9), der angepasst ist zwischen einer Senderkette und einer Empfängerkette zu entscheiden,
- einen T/R Filter (10), der angepasst ist, die empfangenen bzw. gesendeten Signale zu einer gewünschten Frequenz / Amplitude festzusetzen,
- eine Antenne (11), die angepasst ist die ausgehenden/verarbeiteten Signale der Senderkette auszubreiten oder die Signale für Empfängerkette zu empfangen.

2. Ein Biosensor zur Feststellung der chemischen Stoffen wie Proteinmolekule, wie in Anspruch 1, ist **gekennzeichnet durch**;
einen rauscharmen Verstärker (4), der die empfangenen Signale der Empfängerkette mit einem hohen Signal-zu-Geräusch Verhältnis verstärkt.

3. Ein Biosensor zur Feststellung der chemischen Stoffe wie Protein Molekule, wie in Anspruch 1 und 2, **gekennzeichnet dadurch, daß** die Inputsignale zu den Sensoren gezielte bio/chemische Stoffe sind, die eine Veränderung der dielektrischen Konstante des Mediums zwischen den kapazitiven Energieumwandler (8) veranlasst, der der Umgebung ausgesetzt, in den Schaltkreis des Empfängers integriert ist, somit eine Veränderung der Parametern von RF Output des genannten Schaltkreises zur Folge hat und daß mit dieser Veränderung die Art und Menge von bio/chemischen Stoffen festgestellt oder berechnet werden kann.

4. Ein Biosensor zur Feststellung der chemischen Stoffe wie Proteinmolekule, wie in einem der vorangegangenen Ansprüche, **gekennzeichnet dadurch daß** bei der Feststellung verwendete Antikörper Katalysatoren-organische Materialien zwischen den ineinander greifenden Kondensator-Energieumwandler (8) sind, um Wasserstoff und Kohlenwasserstoff Gase/Chemikalien festzustellen.

5. Ein Biosensor zur Feststellung der chemischen Stoffe wie Proteinmolekule, wie in einem der vorangegangenen Ansprüche, **gekennzeichnet dadurch, daß** die bei der Erfassung verwendeten Antikörper organische Oxide zwischen den ineinander greifenden kapazitiven Energiumwandler (8) sind, um Sauerstoff und Sauerstoff reduzierende Gase/Chemikalien festzustellen.

## Revendications

1. Un bio senseur servant à la détermination de matériaux chimiques et/ou biologiques tels que molécules de protéine ou à la transformation de données chimiques ou biologiques en signaux électriques ; attrapé par anticorps déjà immobilisés entre les électrodes, dont la constante diélectrique est changé quand exposé aux molécules cibles de protéine ; possédant un convertisseur et un condensateur interconnectés (8); **caractérisé en ce qu'**il comprend :
- un oscillateur contrôlé par voltage (7) comportant un émetteur - récepteur possédant des composés tels qu'une bande de base adaptée à la formation d'un signal traité séparément, connectée audit convertisseur de condensateur (8) et adaptée à las formation d'un signal local d'oscillateur,
- un mixer (2) adapté pour qu'on ne mélange pas un signal d'oscillateur avec un signal traité,
- un amplificateur de pouvoir (3) adapté à renfoncer un signal déjà traité avant d'être envoyé à une antenne (11),
- un commutateur de T/R (9) adapté pour qu'on décide entre une chaîne émettrice et une chaîne réceptrice,
- un filtre (10) adapté pour qu'on apporte un signal envoyé ou reçu à la fréquence/amplitude désirée,
- une antenne (11) adaptée pour qu'on reçoive le signal pour chaîne réceptrice et qu'on augmente le signal sortant de la chaîne émettrice/traité.

2. Un bio senseur utilisé pour la détermination de matériaux chimiques tels que molécules de protéine selon la revendication 1, **caractérisé en ce qu'**il comprend un amplificateur de voix basse (4) renforçant le signal reçu par chaîne réceptrice par radio d'haut signal - voix.

3. Un bio senseur utilisé pour la détermination de matériaux chimiques tels que molécules de protéine décrites selon les revendications 1 et 2, **caractérisé en ce que** les signaux arrivant au senseur biologique / chimique matériaux de cible causant au changement de la constante diélectrique du milieu entre le condensateur et le convertisseur de pouvoir émis, intégrés au circuit de récepteur - émetteur et donc causant au changement en paramètres de sorties de RF dudit circuit et qu'on détermine et suppose la quantité et le type du matériaux biologiques et chimiques grâce à ce changement.

4. Un bio senseur utilisé pour la détermination de matériaux chimiques tels que molécules de protéine selon l'une des revendications précédentes, **caractérisé en ce qu'**il comprend anticorps utilisés pour la détermination des matériaux organiques - catalyseurs entre le condensateur et le convertisseur de pouvoir (8) pour la détection de l'hydrogène et gaz/agents chimiques hydrocarbonés.

5. Un bio senseur utilisé pour la détermination de matériaux chimiques tels que molécules de protéine selon l'une des revendications précédentes, **caractérisé en ce que** les anticorps utilisés pour la détermination entre le condensateur et le convertisseur de pouvoir (8) pour la détection de l'oxygène et de gaz/agents chimiques réduisant l'oxygène sont acides organiques.
